# EUROPEAN PATENT SPECIFICATION

(11) **EP 1 486 868 B1**
(45) Date of publication and mention of the grant of the patent: **08.08.2007**
(21) Application number: 04013719.2
(22) Date of filing: 11.06.2004
(51) Int. Cl.: G06F 9/445, G06F 17/30

(54) **Non-standard mime type supporting system of mobile terminal and method thereof**
System und Verfahren zur Unterstützung von nicht standardisierten MIME-Typen
Système et procédé de support de types MIME non standard

(30) Priority: 13.06.2003 KR 2003038351
(43) Date of publication of application: 15.12.2004
(73) Proprietor: LG ELECTRONICS INC., Seoul (KR)
(72) Inventor: Kim, Sun-Mo, Incheon (KR)
(74) Representative: Katérle, Axel

(56) References cited:
- US-A- 5 995 756
- US-A1- 2003 084 439
- US-B1- 6 347 398
- US-B1- 6 546 554
- ANONYMOUS: "MIME types and manifest files" MOZILLA.ORG, 20 February 2001 (2001-02-20), XP002201284

## Description

### BACKGROUND OF THE INVENTION

### 1. FIELD OF THE INVENTION

The present invention relates to downloading applications onto a mobile terminal, and more particularly to downloading non-standard MIME (Multipurpose Internet Mail Extensions) type files onto the mobile terminal.

### 2. BACKGROUND OF THE RELATED ART

When a user downloads a file or application onto their mobile terminal, only standard MIME type files can be downloaded. The allowed standard MIME type files are previously established between the mobile communication provider and the manufacturer of the terminal. Further, MIME is a protocol that provides the ability to transfer non-textual files such as audio data, video data, image data, an application program, etc. A Simple Mail Transfer Protocol (SMTP) is a protocol that processes ASCII (American Standard Code for Information Interchange) data.

When a user requests an application (e.g., a Java application) or file be downloaded onto their terminal, a web server first transmits information regarding the data type, but does not transmit the data. In addition, the web server has to recognize the data type before transmitting the data to the client.

Further, the type of data to be transmitted is included in a HTTP (Hyper Text Transfer Protocol) header. HTTP is used to communicate between the server having the requested download file and the mobile terminal. However, as noted above, only standard MIME type files can be down loaded onto the mobile terminal. US 6347398 discloses a method of down loading an application of an unknown type based on the CLASSID attribute in the HTML file.

### SUMMARY OF THE INVENTION

Accordingly, one object of the present invention is to address at least the above-noted and other problems.

Another object of the present invention is to allow non-standard type MIME files to be downloaded onto a terminal (e.g., mobile terminal, subscriber unit, user equipment (UE) etc.).

To achieve these and other objects, the present invention provides a novel method for downloading non-standard MIME type files onto a terminal including determining whether or not a type of the MIME file is supported by the terminal, and downloading a handler to process the MIME file if the type of MIME file is not supported by the terminal.

Additional advantages, objects, and features of the invention will be set forth in part in the description which follows and in part will become apparent to those having ordinary skill in the art upon examination of the following or may be learned from practice of the invention. The objects and advantages of the invention may be realized and attained as particularly pointed out in the appended claims.

### BRIEF DESCRIPTION OF THE DRAWINGS

The invention will be described in detail with reference to the following drawings wherein:
Figure 1 is an overview of a non-standard MIME type file supporting system according to the present invention; and
Figure 2 is a flow chart illustrating a non-standard MIME type file downloading method according to the present invention.

### DETAILED DESCRIPTION OF PREFERRED EMBODIMENTS

Referring now to the drawings, the present invention will be described.

As noted above, a user is only able to download standard MIME type files or applications that have been previously established by the terminal manufacturer and the mobile communications provider. However, one method of downloading a newly defined MIME type file (or a non-standard MIME type file) is for a user to purchase a new terminal that allows the transfer of such a file. Another method is to have new software, etc. of the terminal upgraded at a service center. However, these methods are inconvenient, expensive and generally problematic to the user, the mobile communications provider and the manufacturer of the terminal.

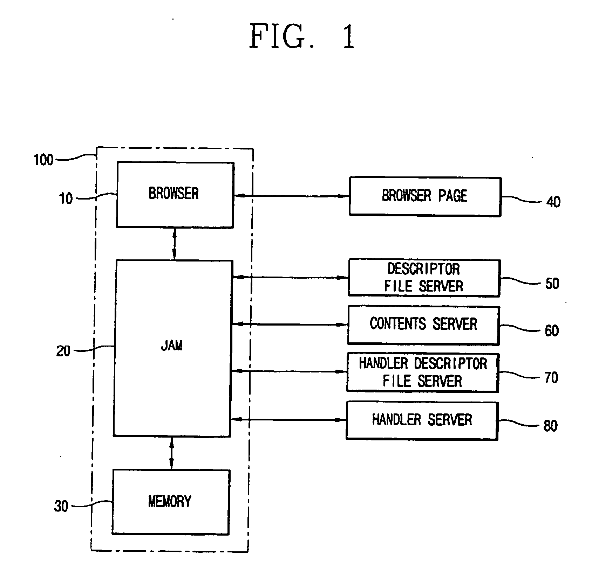

Turning now to Figure 1, which illustrates a non-standard MIME type system including a terminal 100 having a browser 10 for requesting and receiving a descriptor file uniform resource locator (URL); a java application manager (JAM) 20 for searching a handler to process and download non-standard MIME type applications or files; and a memory 30 for storing handlers and contents downloaded by the JAM 20. Also shown is a browser page 40 for transmitting the descriptor file URL to the browser 10; a descriptor file server 50 for transmitting a descriptor file to the JAM 20; a contents server 60 for transmitting the requested contents to the JAM 20; a handler descriptor file server 70 for transmitting a handler descriptor file based on the handler descriptor file URL to the JAM 20; and a handler server 80 for transmitting a handler to the JAM 20.

Further, the terminal 100 downloads data by communicating with each server using HTTP, for example. In addition, the browser 10 of the terminal 100 requests a descriptor file URL from the browser page 40. A header field of the received descriptor file URL also includes information regarding the type of MIME file. If the received descriptor file URL is a non-standard MIME type file, the browser 10 transmits the descriptor file URL and the type of non-standard MIME to the JAM 20.

The JAM 20 then receives the descriptor file URL and the non-standard MIME type file from the browser 10 and searches whether or not a handler for processing the non-standard MIME type is registered in the memory 30. If the handler of the non-standard MIME file is not found, a handler for processing the non-standard MIME file is downloaded from the handler server 80. Further, the requested contents of the non-standard MIME type files are then downloaded from the contents server 60.

In addition, to download the handler for processing the non-standard MIME type file, a request URL (which has a pre-defined format) is prepared by the JAM 20 and sent to the browser 10. The browser 10 then sends the JAM 20 a handler descriptor file URL. The format of the request URL includes the pre-defined request URL and data regarding the type of the MIME file. Further, the JAM 20 uses the handler descriptor file URL to download the appropriate handler descriptor file from the handler descriptor file server 70. The contents of the non-standard MIME type file may then be downloaded from the contents server 60.

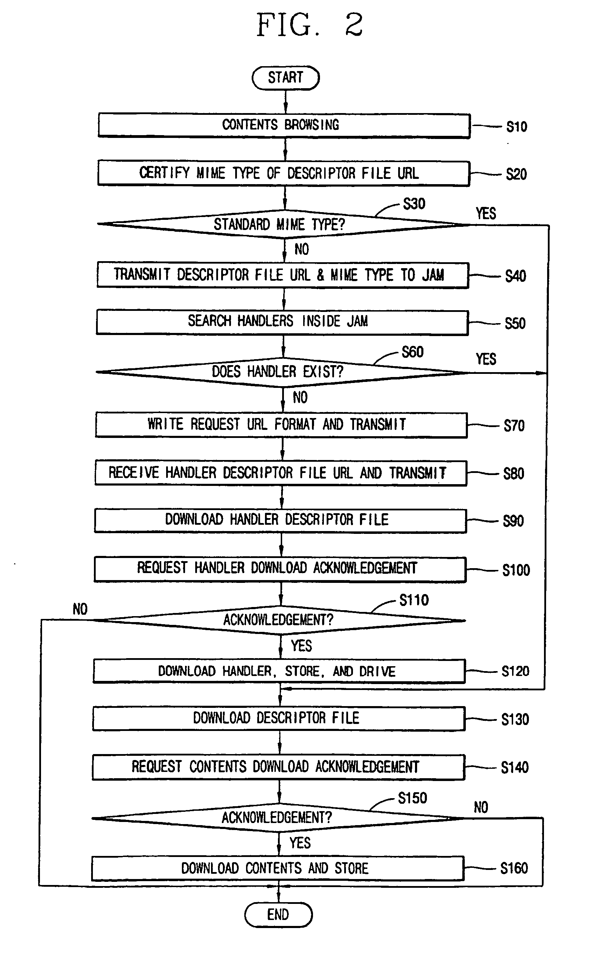

Turning now to Figure 2, which is a flow chart illustrating a method for downloading non-standard MIME files according to the present invention.

As shown, the browser 10 is driven by a predetermined external signal, such as by a user operating the terminal, a wireless application protocol (WAP) push request, a text service, etc., thereby allowing the user to browse applications (step S10). The browser 10 of the terminal 100 then requests a descriptor file URL of the browser page 40, and appropriately receives data including the descriptor file URL from the browser page 40. As discussed above, the terminal 100 and the browser page 40 communicate with each other using HTTP, for example. Further, the MIME type and the descriptor file URL are included in a header field of the HTTP frame of the descriptor file URL.

Then, the browser 10 detects the MIME type information in the header field (step S20), and determines whether or not the MIME type file is a standard MIME type file that can be processed by the browser 10 (step S30). If the MIME data type can not be processed by the browser 10 (i.e., it is a non-standard MIME type file), the browser 10 transmits the descriptor file URL and the MIME type to the JAM 20 (step S40). The JAM 20 then searches the memory 30 to determine if there is an available handler that can process the non-standard MIME type application (step S60).

If a handler for processing the non-standard MIME type file does not exist in the memory 30 (no in step S60), the JAM 20 prepares a request URL using a pre-defined format and sends the request URL to the browser 10 (step S70). As noted above, the request URL format includes the request URL and information regarding the non-standard MIME type. Then, the browser 10 retrieves a handler descriptor file URL and transmits the handler descriptor file URL to the JAM 20 (step S80). The request URL to which the browser has accessed can be a handler server or a browser page. Subsequently, the JAM 20 receives the handler descriptor file URL from the browser 10 and accesses the handler descriptor file server 70, to download the appropriate handler descriptor file (step S90). Then, the JAM 20 requests the user acknowledge whether or not the handler is to be downloaded by displaying a text message, etc. on a display unit of the terminal 100 (step S100).

If the user requests the handler be downloaded (yes in step S110), the JAM 20 accesses the handler server 80 to download the appropriate handler, and stores the handler in the memory 30 (step S120). If the user does not request the handler be downloaded (no in step S110), the terminal 10 completes the operations and enters into an idle state.

Further, when the user requests the handler be downloaded, the handler for processing the non-standard MIME type is downloaded and registered in the memory 30. Then, when the browser 10 accesses the browser page 40 after the handler is registered, the JAM 20 drives the registered handler to receive a new service or contents provided by the mobile communication provider or the contents provider. That is, after the handler is registered in the memory 30, the necessary handler for processing the non-standard MIME type is now used.

Further, the JAM 20 accesses the descriptor file server 70 through the received descriptor file URL to download a descriptor file (step S130), and requests the user acknowledge whether or not the contents are to be downloaded (step S140). If the user requests the contents be downloaded (yes in step S150), the JAM 20 accesses the contents server 60 to download the contents and stores the contents in a predetermined region of the memory (step S160). If the user does not request the contents be downloaded (no in step S150), the terminal 100 completes the operations and enters into an idle state.

Further, if the received MIME type file is a standard MIME type file (yes in Step S30), the JAM 20 accesses the descriptor file server 50 to download the descriptor file (step S130). Steps 140, 150 and 160 are then executed.

Thus, even if the mobile communication provider or the contents provider provides a new service or contents, a handler for processing a non-standard MIME type service or contents can be downloaded. Accordingly, the user can easily handle non-standard MIME types. Further, the mobile communication provider or the contents provider can easily provide new services regardless of the type of the terminal.

In addition, the browser page 40, the descriptor file server 50, the contents server 60, the handler descriptor file server 70, and the handler server 80 may be a single unit or may be separate units, for example.

This invention may be conveniently implemented using a conventional general purpose digital computer or microprocessor programmed according to the teachings of the present specification, as well be apparent to those skilled in the computer art. Appropriate software coding can readily be prepared by skilled programmers based on the teachings of the present disclosure, as will be apparent to those skilled in the software art. The invention may also be implemented by the preparation of application specific integrated circuits or by interconnecting an appropriate network of conventional component circuits, as will be readily apparent to those skilled in the art.

The present invention includes a computer program product which is a storage medium including instructions which can be used to program a computer to perform a process of the invention. The storage medium can include, but is not limited to, any type of disk including floppy disks, optical discs, CD-ROMs, and magneto-optical disks, ROMs, RAMs, EPROMs, EEPROMs, magnetic or optical cards, or any type of media suitable for storing electronic instructions.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art.

## Claims

1. A method for downloading an application to a mobile terminal (100), comprising the steps of:
- transmitting an access request for an application descriptor file addressed by an application descriptor file URL (Uniform Resource Locator) embedded in a web page;
- receiving a response message including the requested application descriptor file; and
- determining (S20) a MIME (Multipurpose Internet Mail Extension) type of the application from a header of the response message;
- judging (S30) if the MIME type of the application is a non-standard MIME type;
- if the MIME type of the application is judged to be a non-standard MIME type, determining (S60) whether or not a handler for the non-standard MIME type application exists in a memory (30) of the terminal;
- if no handler for the non-standard MIME type application exists in the memory (30) of the terminal, downloading (S90) a handler descriptor file from an external handler descriptor file server (70);
- downloading (S120) a handler from an external handler server (80) to the mobile terminal (100) based on the downloaded handler descriptor file; and
- downloading (S160) contents of the non-standard MIME type application to the mobile terminal (100).

2. The method of claim 1, wherein if no handler for the non-standard MIME type application exists, the method further comprises the steps of:
- sending (S70) a prepared request URL to a browser (10) and receiving a handler descriptor file URL from the browser that corresponds to the prepared request URL; and
- downloading (S90) the handler descriptor file from the external handler descriptor file server (70) using the handler descriptor file URL.

3. The method of claim 2, wherein the request URL includes the handler descriptor file URL and data regarding the type of the non-standard MIME application.

4. The method of claim 1, further comprising the step of:
- using a handler for the non-standard MIME type application to process contents of the non-standard MIME type application if such handler exists in the memory (30) of the mobile terminal (100).

5. The method of claim 1, further comprising the step of:
- downloading the application descriptor file if the MIME type of the application is determined to be a standard MIME type.

6. The method of claim 1, further comprising the step of:
- obtaining the application descriptor file URL from the web page based on a request.

7. The method of claim 1, further comprising the step of:
- storing (S160) the downloaded handler in the memory (30) of the mobile terminal (100).

8. The method of claim 1, wherein the step of downloading (S120) the handler comprises the step of:
- prompting (S100) a user of the mobile terminal (100) to acknowledge the handler download prior to downloading the same.

9. The method of claim 1, wherein the step of downloading (S160) the contents comprises the step of:
- prompting (S140) a user of the mobile terminal (100) to acknowledge the contents download prior to downloading the same.

10. The method of claim 1, wherein the response message is a HTTP message.

11. A mobile terminal, wherein the terminal is configured to:
- transmit an access request for an application descriptor file referenced by an application descriptor file URL (Uniform Resource Locator) embedded in a web page;
- receive a response message including the requested application descriptor file; and
- determine (S20) a MIME (Multipurpose Internet Mail Extension) type of the application from a header of the response message;
- judge (S30) if the MIME type of the application is a non-standard MIME type;
- if the MIME type of the application is judged to be a non-standard MIME type, determine (S60) whether or not a handler for the non-standard MIME type application exists in a memory (30) of the terminal;
- if no handler for the non-standard MIME type application exists in the memory (30) of the terminal, download (S90) a handler descriptor file from an external handler descriptor file server (70);
- download (S120) a handler from an external handler server (80) to the mobile terminal (100) based on the downloaded handler descriptor file; and
- download (S160) contents of the non-standard MIME type application.

12. The mobile terminal of claim 11, wherein the terminal (100) includes a browser (10), a java application manager (JAM) (20) and a memory (30), wherein the JAM (20) is configured to receive an application descriptor file from an application descriptor file server (50), receive a handler descriptor file from the handler descriptor file server (70), receive a handler from the handler server (80), and receive contents from a contents server (80).

13. The mobile terminal of claim 12, wherein the terminal (100) is configured to communicate with the application descriptor file server (50), the contents server (60), the handler descriptor file server (70), and the handler server (80) using a HyperText Transfer Protocol (HTTP).

14. The mobile terminal of claim 13, wherein the JAM (20) is configured to search the memory (30) of the terminal (100) for a handler that can process the non-standard MIME type application and to download a handler from the external handler server (80) if no suitable handler is stored in the memory.

## Patentansprüche

1. Verfahren zum Herunterladen einer Anwendung auf ein mobiles Endgerät (100), umfassend die Schritte:
- Abschicken einer Zugriffsanforderung für eine Anwendungsdeskriptordatei, welche durch eine in eine Webseite eingebettete Anwendungsdeskriptordatei-URL (Uniform Resource Locator) addressiert ist,
- Empfangen einer die angeforderte Anwendungsdeskriptordatei enthaltenden Anwortnachricht und
- Ermitteln (S20) eines MIME (Multipurpose Internet Mail Extension) -Typs der Anwendung aus einem Kopfteil der Antwortnachricht,
- Feststellen (S30), ob der MIME-Typ der Anwendung ein nicht standardmäßiger MIME-Typ ist,
- falls der MIME-Typ der Anwendung als ein nicht standardmäßiger MIME-Typ festgestellt wird, Ermitteln (S60), ob in einem Speicher (30) des Endgeräts ein Handler für die Anwendung des nicht standardmäßigem MIME-Typs vorhanden ist oder nicht,
- falls in dem Speicher (30) des Endgeräts kein Handler für die Anwendung des nicht standardmäßigen MIME-Typs vorhanden ist, Herunterladen (S90) einer Handlerdeskriptordatei von einem externen Handlerdeskriptordateiserver (70),
- Herunterladen (S120) eines Handlers von einem externen Handlerserver (80) auf das mobile Endgerät (100) anhand der heruntergeladenen Handlerdeskriptordatei und
- Herunterladen (S160) von Inhalten der Anwendung des nicht standardmäßigen MIME-Typs auf das mobile Endgerät (100).

2. Verfahren nach Anspruch 1, wobei dann, wenn kein Handler für die Anwendung des nicht standardmäßigen MIME-Typs vorhanden ist, das Verfahren ferner die Schritte umfasst:
- Senden (S70) einer vorbereiteten Anforderungs-URL an einen Browser (10) und Empfangen einer der vorbereiteten Anforderungs-URL entsprechenden Handlerdeskriptordatei-URL von dem Browser und
- Herunterladen (S90) der Handlerdeskriptordatei von dem externen Handlerdeskriptordateiserver (70) unter Verwendung der Handlerdeskriptordatei-URL.

3. Verfahren nach Anspruch 2, wobei die Anforderungs-URL die Handlerdeskriptordatei-URL sowie Daten betreffend den Typ der nicht standardmäßigen MIME-Anwendung enthält.

4. Verfahren nach Anspruch 1, ferner umfassend den Schritt:
- Verwenden eines Handlers für die Anwendung des nicht standardmäßigen MIME-Typs zur Verarbeitung von Inhalten der Anwendung des nicht standardmäßigen MIME-Typs, sofern ein derartiger Handler in dem Speicher (30) des mobilen Endgeräts (100) vorhanden ist.

5. Verfahren nach Anspruch 1, ferner umfassend den Schritt:
- Herunterladen der Anwendungsdeskriptordatei, falls der MIME-Typ der Anwendung als standardmäßiger MIME-Typ festgestellt wird.

6. Verfahren nach Anspruch 1, ferner umfassend den Schritt:
- Erhalten der Anwendungsdeskriptordatei-URL von der Webseite abhängig von einer Anforderung.

7. Verfahren nach Anspruch 1, ferner umfassend den Schritt:
- Speichern (S160) des heruntergeladenen Handlers in dem Speicher (30) des mobilen Endgeräts (100).

8. Verfahren nach Anspruch 1, wobei der Schritt des Herunterladens (S120) des Handlers den Schritt umfast:
- Auffordern (S100) eines Benutzers des mobilen Endgeräts (100), das Herunterladen des Handlers zu bestätigen, bevor derselbe heruntergeladen wird.

9. Verfahren nach Anspruch 1, wobei der Schritt des Herunterladens (S160) der Inhalte den Schritt umfasst:
- Auffordern (S140) eines Benutzers des mobilen Endgeräts (100), das Herunterladen der Inhalte zu bestätigen, bevor dieselben heruntergeladen werden.

10. Verfahren nach Anspruch 1, wobei die Antwortnachricht eine HTTP-Nachricht ist.

11. Mobiles Endgerät, wobei das Endgerät dazu eingerichtet ist:
- eine Zugriffsanforderung für eine Anwendungsdeskriptordatei abzuschicken, welche durch eine in eine Webseite eingebettete Anwendungsdeskriptordatei-URL (Uniform Resource Locator) addressiert ist,
- eine die angeforderte Anwendungsdeskriptordatei enthaltende Anwortnachricht zu empfangen und
- einen MIME (Multipurpose Internet Mail Extension) -Typ der Anwendung aus einem Kopfteil der Antwortnachricht zu ermitteln (S20),
- festzustellen (S30), ob der MIME-Typ der Anwendung ein nicht standardmäßiger MIME-Typ ist,
- falls der MIME-Typ der Anwendung als ein nicht standardmäßiger MIME-Typ festgestellt wird, zu ermitteln (S60), ob in einem Speicher (30) des Endgeräts ein Handler für die Anwendung des nicht standardmäßigem MIME-Typs vorhanden ist oder nicht,
- falls in dem Speicher (30) des Endgeräts kein Handler für die Anwendung des nicht standardmäßigen MIME-Typs vorhanden ist, eine Handlerdeskriptordatei von einem externen Handlerdeskriptordateiserver (70) herunterzuladen (S90),
- einen Handler von einem externen Handlerserver (80) auf das mobile Endgerät (100) anhand der heruntergeladenen Handlerdeskriptordatei herunterzuladen (S120) und
- Inhalte der Anwendung des nicht standardmäßigen MIME-Typs herunterzuladen (S160).

12. Mobiles Endgerät nach Anspruch 11, wobei das Endgerät (100) einen Browser (10), einen Java-Anwendungsmanager (JAM) (20) sowie einen Speicher (30) umfasst, wobei der JAM (20) dazu eingerichtet ist, eine Anwendungsdeskriptordatei von einem Anwendungsdeskriptordateiserver (50) zu erhalten, eine Handlerdeskriptordatei von dem Handlerdeskriptordateiserver (70) zu erhalten, einen Handler von dem Handlerserver (80) zu erhalten sowie Inhalte von einem Inhalteserver (80) zu erhalten.

13. Mobiles Endgerät nach Anspruch 12, wobei das Endgerät (100) dazu eingerichtet ist, mit dem Anwedungsdeskriptordateiserver (50), dem Inhalteserver (60), dem Handlerdeskriptordateiserver (70) sowie dem Handlerserver (80) unter Verwendung eines HyperText Transfer Protocol (HTTP) zu kommunizieren.

14. Mobiles Endgerät nach Anspruch 13, wobei die JAM (20) dazu eingerichtet ist, den Speicher (30) des Endgeräts (100) nach einem Handler zu durchsuchen, der die Anwendung des nicht standardmäßigen MIME-Typs verarbeiten kann, und einen Handler von dem externen Handlerserver (80) herunterzuladen, sofern kein geeigneter Handler in dem Speicher gespeichert ist.

## Revendications

1. Procédé servant à télécharger une application sur un terminal mobile (100), comprenant les étapes consistant à :
- transmettre une demande d'accès pour un fichier descripteur d'application adressée par un URL (Uniform Resource Locator : localisateur de ressources universel) du fichier descripteur d'application intégré dans une page web ;
- recevoir un message de réponse comprenant le fichier descripteur d'application demandé ; et
- déterminer (S20) un type MIME (Multipurpose Internet Mail Extension : extension polyvalente des messages Internet) de l'application à partir d'un en-tête du message de réponse ;
- juger (S30) si le type MIME de l'application est un type MIME non standard ;
- si le type MIME de l'application est jugé comme étant un type MIME non standard, déterminer (S60) si un gestionnaire pour l'application de type MIME non standard existe ou non dans une mémoire (30) du terminal ;
- si aucun gestionnaire n'existe pour l'application de type MIME non standard dans la mémoire (30) du terminal, télécharger (S90) un fichier descripteur de gestionnaire à partir d'un serveur de fichier descripteur de gestionnaire externe (70);
- télécharger (S120) un gestionnaire à partir d'un serveur de gestionnaire externe (80) sur le terminal mobile (100) basé sur le fichier descripteur de gestionnaire téléchargé ; et
- télécharger (S160) les contenus de l'application de type MIME non standard sur le terminal mobile (100).

2. Procédé selon la revendication 1, dans lequel si aucun gestionnaire n'existe pour l'application de type MIME non standard, le procédé comprend en outre les étapes consistant à :
- envoyer (S70) une demande d'URL préparée à un navigateur (10) et recevoir un URL du fichier descripteur de gestionnaire provenant du navigateur qui correspond à la demande d'URL préparée ; et
- télécharger (S90) le fichier descripteur de gestionnaire à partir du serveur de fichier descripteur de gestionnaire externe (70) en utilisant l'URL du fichier descripteur de gestionnaire.

3. Procédé selon la revendication 2, dans lequel la demande d'URL comprend l'URL du fichier descripteur de gestionnaire et les données concernant le type de l'application MIME non standard.

4. Procédé selon la revendication 1, comprenant en outre l'étape consistant à :
- utiliser un gestionnaire pour l'application de type MIME non standard pour traiter les contenus de l'application de type MIME non standard si un tel gestionnaire existe dans la mémoire (30) du terminal mobile (100).

5. Procédé selon la revendication 1, comprenant en outre l'étape consistant à :
- télécharger le fichier descripteur d'application si le type MIME de l'application est déterminé comme étant un type MIME standard.

6. Procédé selon la revendication 1, comprenant en outre l'étape consistant à :
- obtenir l'URL du fichier descripteur d'application de la page web sur la base d'une demande.

7. Procédé selon la revendication 1, comprenant en outre l'étape consistant à :
- stocker (S160) le gestionnaire téléchargé dans la mémoire (30) du terminal mobile (100).

8. Procédé selon la revendication 1, dans lequel l'étape consistant à télécharger (S120) le gestionnaire comprend l'étape consistant à :
- inviter (S100) un utilisateur du terminal mobile (100) à reconnaître le téléchargement du gestionnaire avant de le télécharger.

9. Procédé selon la revendication 1, dans lequel l'étape consistant à télécharger (S160) les contenus comprend l'étape consistant à :
- inviter (S140) un utilisateur du terminal mobile (100) à reconnaître le téléchargement des contenus avant de les télécharger.

10. Procédé selon la revendication 1, dans lequel le message de réponse est un message HTTP.

11. Terminal mobile, dans lequel le terminal est configuré pour :
- transmettre une demande d'accès pour un fichier descripteur d'application référencée par un URL (Uniform Resource Locator) du fichier descripteur d'application intégré dans une page web ;
- recevoir un message de réponse comprenant le fichier descripteur d'application demandé ; et
- déterminer (S20) un type MIME (Multipurpose Internet Mail Extension) de l'application à partir d'un en-tête du message de réponse ;
- juger (S30) si le type MIME de l'application est un type MIME non standard ;
- si le type MIME de l'application est jugé comme étant un type MIME non standard, déterminer (S60) si un gestionnaire pour l'application de type MIME non standard existe ou non dans une mémoire (30) du terminal ;
- si aucun gestionnaire n'existe pour l'application de type MIME non standard dans la mémoire (30) du terminal, télécharger (S90) un fichier descripteur de gestionnaire à partir d'un serveur de fichier descripteur de gestionnaire externe (70) ;
- télécharger (S120) un gestionnaire à partir d'un serveur de gestionnaire externe (80) sur le terminal mobile (100) basé sur le fichier descripteur de gestionnaire téléchargé ; et
- télécharger (S160) les contenus de l'application de type MIME non standard.

12. Terminal mobile selon la revendication 11, dans lequel le terminal (100) comprend un navigateur (10), un gestionnaire d'application java (JAM) (20) et une mémoire (30), dans lequel le JAM (20) est configuré pour recevoir un fichier descripteur d'application provenant d'un serveur de fichier descripteur d'application (50), recevoir un fichier descripteur de gestionnaire provenant du serveur de fichier descripteur de gestionnaire (70), recevoir un gestionnaire provenant du serveur de gestionnaire (80), et recevoir des contenus provenant d'un serveur de contenus (80).

13. Terminal mobile selon la revendication 12, dans lequel le terminal (100) est configuré pour communiquer avec le serveur de fichier descripteur d'application (50), le serveur de contenus (60), le serveur de fichier descripteur de gestionnaire (70), et le serveur de gestionnaire (80) en utilisant un protocole de transfert hypertexte (HTTP : HyperText Transfer Protocol).

14. Terminal mobile selon la revendication 13, dans lequel le JAM (20) est configuré pour rechercher la mémoire (30) du terminal (100) pour un gestionnaire qui peut traiter l'application de type MIME non standard et télécharger un gestionnaire provenant du serveur de gestionnaire externe (80) si aucun gestionnaire approprié n'est stocké dans la mémoire.
